# EUROPEAN PATENT APPLICATION

(11) **EP 1 225 768 A1**
(43) Date of publication of application: **24.07.2002**
(21) Application number: 02250012.8
(22) Date of filing: 02.01.2002
(51) Int. Cl.: H04N 7/24, H04N 5/00

(54) **Information on demand**

(30) Priority: 03.01.2001 GB 0100076
(71) Applicant: Pace Micro Technology PLC, Saltaire, Shipley, BD18 3LF (GB)
(72) Inventor: Matey, Jesus, Leeds LS4 2SZ (GB)
(74) Representative: Wood, Graham

(57) **Abstract**

A broadcast data receiver for the reception of data broadcast from a remote location, processing of the data and generation of video and/or audio therefrom in the form of a television programme for viewing. The receiver includes a table, such as an Event Information Table (EIT) which includes one or more strings of data. A user can request to be informed of an occurrence or occurrences of data from one or more of the strings being identified in a user-selected programme. The receiver informs the user of an occurrence and/or every occurrence of said data identified in said selected programme at the time of said programme being broadcast. Alternatively, or in addition to, the user can select to be updated with information relating to the occurrences of data at their convenience by selecting a pre-designated button on the remote control unit.

## Description

The invention to which the application relates is to the provision of information in an improved format to a viewer of video on a display screen generated from data which is broadcast from a remote location. In particular the information is provided from the broadcaster and interpreted and processed by a broadcast data receiver (BDR) provided at the location of the viewer.

Typically, when a viewer is watching a television programme, the data for the generation of the programme is broadcast from a remote location and what the viewer sees and how often they see it is determined by the broadcaster providing the data. The fact that the viewer may not be able to see certain data, which is displayed sporadically, when the viewer wishes to see it, can cause frustration to the viewer and, in some instances, can prevent the viewer from continuing to watch the programme. This can be particularly frustrating during the transmission of programmes which are live, which tend to be, although not exclusively, sporting events. In this type of event, as the action is happening at the same time as the viewer is watching, the viewer is obviously not aware of the final outcome and is therefore entirely reliant upon the information provided by the broadcaster. However, if the viewer misses part of the transmission or the broadcaster omits to provide information, the viewer may have to watch the programme for a significant period of time before they can ascertain exactly what is being shown and/or what other events are happening at the same time.

Thus the problems which this invention addresses can be exemplified as follows. Firstly, if a viewer tunes to a channel and would like to know the score of a sporting event being shown straightaway they cannot currently obtain that information unless the broadcaster decides, at their sole discretion, when to display the information. The same applies if the viewer wishes to know who is playing. A further problem is that if the viewer does not want to watch the whole game but wants to be warned when there is a specified event such as a goal in a football match, while watching another programme, the viewer at present cannot be informed of the event.

United States Patent US5589892 discloses the provision of an electronic programme schedule system which allows a user to select a category of interest for storing in a user preference list, such as sport, movies and/or similar. When a user is tuned to a particular channel, the user can select a browse button on the remote control handset and a graphic overlay is displayed over the currently viewed display. The graphic overlay contains information relating to channels identified by the category of interest in the user preference list. Thus for example, if a sporting category is selected in the user preference list, all the channels with sports programmes shown thereon will in turn be displayed in the graphic overlay with information relating to each programme. The user is required to use the arrow keys on the remote control to move through the programmes until they arrive at the programme of interest to them. Thus although US5589892 provide a means of accessing information on demand, it is time consuming for the user to pass through a number of programmes before arriving at a programme of interest and it is likely to be quicker for the user to tune directly into the channel showing the programme of interest to them to obtain information relating thereto.

European Patent Application EP0912053 discloses the transmission of a sporting event to a receiver, where a viewer watching one channel may be informed of the occurrence of an event, such as a goal, on another channel. An icon or message informing the user of the occurrence of the event is automatically displayed on the display screen on detection of the occurrence or the receiver is automatically tuned into the channel on which the occurrence has been detected. There is no disclosure of a television system where the user can request information at their convenience in relation to the occurrence of a particular event.

It is therefore an aim of the present invention to provide a broadcast data receiver which allows a viewer to obtain information as and when the viewer designates so that the viewer has a degree of control over the display and provision of the information.

In a first aspect of the invention there is provided a broadcast data receiver for the reception of data broadcast from a remote location, processing of the data and generation of video and/or audio therefrom in the form of a television programme for viewing on a display screen, said receiver including one or more information tables which include strings of data and said receiver having means by which a user can request to be informed of one or more items of data from the string(s) being identified in a user-selected programme and characterised in that on user-selection of a pre-designated button of a control unit of the receiver, said receiver provides a display over the current video display on the display screen informing the user of whether said user requested item or items of data have been identified in said user-selected programme, irrespective of whether the receiver is currently tuned into said user-selected programme at that time.

The user is therefore informed of any or any combination of the occurrence of their requested data item or items, the frequency of occurrence of the requested data item or items, irrespective of whether they are watching the selected programme or whether they are tuned to a different programme on another channel, video and/or the like. For example, the user can request to be updated on the occurrence of data items identified in the selected programme since the last user request for information or since the selected programme began and/or the like.

Preferably the control unit is a remote control handset. The user depresses an appropriate button on the handset when they require information relating to their pre-selected programme.

In one embodiment the string of data is activated in respect of a live "Sport" event and in this embodiment the string can include any or any combination of the score of the sport event (football, golf, basketball, tennis, etc.), participants in the event, location of the event, scorers in the event and so on to suit particular requirements for the event.

Preferably an event information table (EIT) contains the strings of data. The EIT is typically a table of user and/or pre-defined requests that are stored in the memory of the receiver. The string of data relates to the request and can include the channel on which a particular television programme is being shown, the start and/or finish times of a particular programme, one or more titles of programmes, details as to the type of information the user wishes to be updated on and/or the like.

Typically the data for this string and the groups of data are updated in real time at the broadcaster location and transmitted to the receiver.

In one embodiment, in addition to or alternatively, the viewer is warned when a specific event has occurred even if they are not watching the particular television programme or listening to an audio channel or have not specifically requested the information at that moment. An example of this is that if there is a change in the score of a game of football being shown on a particular channel, and the viewer is watching another channel, the viewer can request that they are informed when the change in score occurs.

The introduction of this invention in the current Digital TV systems requires a change in the System Information (SI) tables (tables carrying information about the network and transport streams carrying services, such as channels and programmes), and/or in the way the EEPG (Electronic Programme Guide) handles the SI information and/or in the way the SI is generated.

According to a second aspect of the present invention there is provided a method of using a broadcast data receiver, said broadcast data receiver for the reception of data broadcast from a remote location, processing of the data and generation of video and/or audio therefrom in the form of a television programme for viewing on a display screen, said receiver including one or more information tables which include strings of data and characterised in that said method includes the steps of a user selecting to be informed of one or more items of data from the string(s) being identified in a user-selected programme and, on user-selection of a pre-designated button of a control unit of said receiver, said receiver searching the Event Information Tables(s) (EIT) for said one or more items of data relating to the user-selected programme, and following said search informing said user of whether said item or items were identified in said user-selected programme.

Preferably the receiver informs the user of whether the item or items were identified or information relating thereto using a pop-up window which overlays the graphic display currently shown on the display screen.

The present invention allows a user to quickly and easily gain access to information relating to a pre-selected programme of the user's choice at the user's convenience and whilst watching a programme on a different channel. The user can therefore be continually updated with, for example, the latest score of a football match or the like, when they depress a button on the remote control handset of the television system without having to leave the channel the user is currently tuned to.

Specific embodiments of the invention are now described.

In a preferred embodiment the invention requires the use of two descriptors in the EIT p/f (present programme, following programme for a particular channel) "actual" and "other" tables (for the actual Transport Stream and for other Transport Streams). These EIT tables are sent to the Broadcast Data Receiver (BDR) at whichever frequency the BDR is tuned to, so only one tuner is required. Use of two tuners would speed up the process, as only the EIT present/following actual (for 2 different transport streams (TS)) would be required.

Particularly, the 2 descriptors needed are the following:
1. content_descriptor (DVB standard). The field content_nibble_1 carries information about the type of event. If the type of event is "sport" this field carries the value "0x4". The broadcaster might be interested in using also the field content_nibble_level_2 in order to specify a bit more the type of sport events that will include information about the score. For example it might not be included for athletics events or sports magazines but might be included for football or team sports).
2. private_sport_event_descriptor (broadcaster specific descriptor). This (optional) descriptor will be only relevant if the type of event is "sport". In that case, it will carry the information about the score. This information is carried in string format, including end of line characters. The format of this descriptor is explained below

| Syntax | No. of bits | Identifier |
|---|---|---|
| private_sport_event_descriptor() | | |
| descriptor_tag | 8 | unimsbf |
| descriptor-length for (I=0,I<N,I++) | 8 | unimsbf |
| text_char | 8 | unimsbf |

The broadcaster supplies the text in the desired format. If the event is a football game the text could be something like "Manchester City = 1\n Manchester United - 1" where \n stands for the character End Of Line. In one format the electronic programme guide facility (EEPG) can be used to display this information as
Manchester City = 1
Manchester United = 1

Similarly, for a golf game, the string "Montgomerie = .9\nBallesteros = .9\nNorman = .8\nWoods = - 7" will lead to something like:
Montgomerie = -9
Ballesteros = -9
Norman = -8
Woods = -7

However, in the case of a motor race, we might prefer something like "1 Schumacher 1:10:30\n2 Hakinnen 5s\n3 Coulthard 9s\n15 De la Rosa 4 laps" with the following consequences:
1 Schumacher 1:10:30
2 Hakinnen 5s
3 Coulthard 9s
15 De la Rosa 4 laps

Upon receipt of these descriptors, the EEPG will store the string containing the score only for the events whose type and subtype (nibble1 and nibble2) match the broadcaster requirements as stated before. The user, while watching a sport event, could request the score by pressing a specified key in the remote control and the EEPG could display a pop-up window containing this information until the user presses the same key again to dispel the pop-up. The pop-up window overlays the current video display being watched by the user.

For the second possibility of this invention, the user presses a specific key in the remote control to indicate his/her particular interest in the current sport event. The user can then watch a different channel and he/she will be warned when a new private_sport_event_descriptor descriptor (for that specific sport event) arrives. The EEPG will set a flag associated with the score of this event. When a new EIT p/f (carrying information about this event) arrives, the EEPG checks if the score has changed and the state of this flag. If the flag is set and the score has changed, a pop-up will be displayed, offering the possibility of re-tuning quickly by pressing the OK key. If this is not too late, the user might be able to watch the relay (for example in a football game).

For both applications, the EEPG might have an indicator to remark the existence of this possibility. For example there could be a RCU button close to a caption like "Score". This button and caption could appear in the now-next bar.

The same button could be used to reset the value of the flag (used in the EEPG) when the user is no longer interested in this sport event.

Change is also required at the head end or broadcaster ( where the SI is generated). There must be updating of the score of the events where this service is available. This will update the descriptor carrying the score and will increase the EIT p/f version number (the STB only reads a new EIT table when the version number is bigger than the last processed one). Speed in this process, even if always desirable, is only a particular requirement for the 2nd utility of this invention.

Thus in a practical example, the viewer tunes to a sport event and wishes to be able to check the score by pressing one RCU key (key A). In accordance with the invention rather than having to sometimes wait for the score to be shown, in accordance with the invention a string on the EIT table for the sport event being watched is to be displayed when the user presses a specific key in the RCU. A display will appear containing information in a very simple format (i.e., name score name score.....name score). Pressing the same key again causes the display to be dispelled. As we are tuned to the TS containing the information, no additional hardware is required.

In another practical example, a more sophisticated use of this invention is the option of being warned when the score changes. This example is applicable to a football match. If the viewer does not want to watch the whole match the BDR can send a message saying that the score has changed to be displayed on screen and the viewer can go back and see the repetition (replay). Using this invention the viewer does not miss a goal. The viewer can achieve this by pressing a specific key in the remote control (key:B) to let the BDR know that they are still interested in knowing any changes in the score. When this happens, a display appears indicating this change and by pressing the OK key over this display the viewer can directly tune again to the football match and see the repetition (replay). In this case, the BDR can be provided with 2 tuners, as the information about the football match might be carried in a different Transport Stream (TS) to the one in which the film that the viewer is watching is included. Alternatively one tuner can be used as the EIT p/f is broadcast to the BDR for the current TS and for other TS's. Upon receipt of a change of score for example, the BDR can tune to the channel where the score occurred and although a secondary tuner would speed up the process, it is not necessary for the invention to function.

This embodiment also needs someone at the headend to update information in real-time. Thus the score can be shown at any time, the user can watch a film and be aware of the changes in the score of a particular sporting event, and be able to tune into the event without delay to catch the repetition.
Example 1: Manchester Utd 1 Manchester City 1.
Example 2: Montgomerie - 9 Ballesteros - 9 Woods - 8.
Example 3: Message indicating "Goal". By pressing OK the user can tune to the channel where the sporting event is being shown.

## Claims

1. A broadcast data receiver for the reception of data broadcast from a remote location, processing of the data and generation of video and/or audio therefrom in the form of a television programme for viewing on a display screen, said receiver including one or more information tables which include strings of data and said receiver having means by which a user can request to be informed of one or more items of data from the string(s) being identified in a user-selected programme and **characterised in that** on user-selection of a pre-designated button of a control unit of the receiver, said receiver provides a display over the current video display on the display screen informing the user of whether said user requested item or items of data have been identified in said user-selected programme, irrespective of whether the receiver is currently tuned into said user-selected programme at that time.

2. A broadcast data receiver according to claim 1 **characterised in that** the string of data is identified in respect of a live "sport" event.

3. A broadcast data receiver according to claim 1 **characterised in that** the receiver informs the user of any or any combination of whether or not the item or items of data have been identified in the selected programme, the frequency at which the items of data were identified in said programme, details relating to the occurrence of the data items or an update of the occurrence of said data items since the last user-request for information and/or since the user-selected programme started.

4. A broadcast data receiver according to claim 1 **characterised in that** the string of data includes any or any combination of the score of the sport event, participants in the event, location of the event and/or scorers in the event.

5. A broadcast data receiver according to claim 1 **characterised in that** the string of data is updated in real time at the broadcaster location and transmitted to the receiver.

6. A broadcast data receiver according to claim 1 **characterised in that** the user can select one or more data strings from the information tables in relation to a user-selected programme.

7. A broadcast data receiver according to claim 1 **characterised in that** the user can input data strings into the one or more information tables for subsequent selection in relation to the user selected programme.

8. A broadcast data receiver according to claim 1 **characterised in that** the control unit is a remote control handset.

9. A method of using a broadcast data receiver, said broadcast data receiver for the reception of data broadcast from a remote location, processing of the data and generation of video and/or audio therefrom in the form of a television programme for viewing on a display screen, said receiver including one or more information tables which include strings of data and **characterised in that** said method includes the steps of a user selecting to be informed of one or more items of data from the string(s) being identified in a user-selected programme and, on user-selection of a pre-designated button of a control unit of said receiver, said receiver searching the Event Information Tables(s) (EIT) for said one or more items of data relating to the user-selected programme, and following said search informing said user of whether said item or items were identified in said user-selected programme.
